# EUROPÄISCHE PATENTANMELDUNG

(11) **EP 2 039 232 A1**
(43) Veröffentlichungstag der Anmeldung: **25.03.2009**
(21) Anmeldenummer: 08015913.0
(22) Anmeldetag: 10.09.2008
(51) Int. Cl.: A01C 7/00, A01B 73/04

(54) **Pneumatische Verteilmaschine**

(30) Priorität: 18.09.2007 DE 102007044551
(71) Anmelder: Amazonen-Werke H. Dreyer GmbH & Co. KG, 49205 Hasbergen (DE)
(72) Erfinder: Müller, Gerhard, 27749 Delmenhorst (DE)

(57) **Zusammenfassung**

Pneumatische Verteilmaschine mit einem Rahmen (1), Vorratsbehälter (17), dem Vorratsbehälter zugeordneter Dosiervorrichtung, die das sich im Vorratsbehälter (17) befindliche auszubringende Material in zumindest eine pneumatisch beaufschlagte und zu zumindest einem aufrecht stehend angeordnetem Steigrohr (15) mit zugeordnetem Verteiler führende Förderleitung einspeist, wobei das zumindest eine Steigrohr mit dem Verteiler auf zumindest einem Tragbalken (6,8) und/oder -rahmen der Verteilmaschine um eine quer zur Fahrtrichtung (7) verlaufende Achse verschwenkbar angeordnet ist, wobei von zumindest einem Verteiler Verteilerleitungen zu an Querbalken (9,9') angeordneten Materialablageeinrichtungen (10,10') führen, wobei das Steigrohr (15) mit dem Verteiler mittels eines motorischen Stellelementes (18) entgegen der Arbeitsrichtung verschwenkbar ist, wobei die Materialablageeinrichtung in mehreren Querreihen hintereinander und auf Lücke zueinander an den Querbalken (9,9') des Tragbalkens (6,8) und/oder -rahmens angeordnet sind, wobei der Tragbalken und/oder -rahmen (6,8) mit den an seinen Querbalken angeordneten Materialablageeinrichtungen (10) um eine quer zur Fahrt- und/oder Arbeitsrichtung in eine aufrechte Transportstellung verlaufende Schwenkachse in Arbeitsrichtung (7) verschwenkbar angeordnet ist, wobei zumindest der hintere Querbalken, an dem die hinteren Materialablageeinrichtungen angeordnet sind, um eine quer zur Arbeitsrichtung (7) verlaufende Schwenkachse in der Weise verdrehbar ist, dass die Materialablageeinrichtungen in Richtung der vorderen Materialablageeinrichtungen (10) einziehbar sind, und wobei zwischen dem hinteren Querbalken (9') und dem Steigrohr (15) ein vorzugsweise als Zugelement ausgebildetes Verbindungselement (21) angeordnet ist, und zwar derart, dass beim Aufrichten des Steigrohres der hintere Querbalken (9') mit den hinteren Materialablageeinrichtungen derart verdrehbar ist, dass die hinteren Materialablageeinrichtungen (10') aus der eingezogenen Position in ihre Arbeitsposition gegenüber dem Tragbalken (6,8) und/oder -rahmen gebracht werden und/oder bringbar sind.

## Beschreibung

Die Erfindung betrifft eine pneumatische Verteilmaschine mit einem Rahmen, Vorratsbehälter, dem Vorratsbehälter zugeordnete Dosiervorrichtung, die das sich im Vorratsbehälter befindliche Material in zumindest einem pneumatisch beaufschlagte und zu zumindest einem aufrecht stehenden angeordneten Steigrohr mit zugeordnetem Verteiler führende Verteilerleitung einspeist. Das zumindest ein Steigrohr mit dem Verteiler ist auf zumindest einem Tragbalken und/oder Rahmen der Verteilmaschine um eine quer zur Fahrtrichtung verlaufende Achse verschwenkbar angeordnet.

Eine derartige Verteilmaschine ist beispielsweise durch die DE 37 51 912 T2'bekannt. Um in die Verteilmaschine, die bei sich in Arbeitsstellung befindlichen Scharbalken eine Arbeitsbreite von größer als 3 m aufweist, auf eine Transportbreite unter 3 m zu bringen, werden die Scharbalken mit den Steigrohren und den daran angeordneten Verteilern um in Fahrtrichtung verlaufende Achsen aus ihrer waagerecht verlaufenden Arbeitsposition in eine senkrechte Transportposition eingeklappt. Um dieses zu ermöglichen, und um damit die Steigrohre mit den Verteilern nicht miteinander oder mit den gegenüberliegenden Scharbalken kollidieren, werden die Steigrohre mit dem Verteiler um eine in Fahrtrichtung verlaufende Achse nach vorn verschwenkt.

Bei Verteilmaschinen, bei denen der Rahmen um eine quer zur Fahrtrichtung verlaufende Achse in eine aufrechte Transportposition verschwenkt wird, ist das nach vorn Verschwenken der Steigrohre mit den Verteilern nachteilig. Darüber hinaus wird hier durch keine kompakte Transportstellung der gesamten Verteilmaschine erreicht.

Auch ist problematisch, wenn die Tragrahmen oder Tragbalken mit den an ihnen angeordneten Materialablageeinrichtung, insbesondere, wenn sie weit in Arbeitsstellung nach hinten herausragt, nicht gewährleistet, dass die maximale Transporthöhe von 4 m einzuhalten ist.

Der Erfindung liegt die Aufgabe zugrunde, bei Verteilmaschinen, die in Arbeitsrichtung ausladende Tragelemente und Materialablageeinrichtungen aufweisen, die nach dem Bringen in Transportstellung eine große Höhe aufweisen, die Transporthöhe verringern und in eine kompakte Stellung bringen und andererseits die eingezogenen Teile in einfacher Weise wieder aus der kompakt eingefalteten Position in die Arbeitsposition bringen zu können.

Diese Aufgabe wird erfindungsgemäß durch die Merkmale des Patentanspruches 1 gelöst. Infolge dieser Maßnahmen wird eine kompakt eingefaltete Verteilmaschine mit ihrem am Tragbalken angeordneten Steigrohr und Materialablageeinrichtung mit verringerter Transporthöhe in einfacher Weise erreicht. Hierbei wird nach dem in Transportposition verschwenken des Steigrohres es für die hintere Reihe der Materialeinrichtung ermöglicht, dass diese bei Aufrechtstellen des Tragbalkens und/oder -rahmen einschwenken und andererseits wird erreicht, dass beim Bringen des Tragbalkens oder -rahmens der aufrechten Transportposition beim gleichzeitigen Aufrichten des Steigrohres der hintere Querbalken mit den hinteren Materialeinrichtungen wieder in Arbeitsposition ohne zusätzliche Stellelemente gebracht wird.

Um ein Verdrehen des hinteren Querbalkens beim Bringen aus der Arbeits- in die Transportposition zu ermöglichen, ist vorgesehen, dass der hintere verdrehbar angeordnete Querbalken mittels einer lösbaren Arretierungsvorrichtung in der Arbeitsstellung der Materialablageeinrichtungen gegenüber dem Tragrahmen oder -balken festsetzbar ist.

Um in einfacher Weise ein Verdrehen des Querbalkens über das Verbindungselement durch das an dem Steigrohr angeordnete Stellelement zu ermöglichen, ist vorgesehen, dass am verdrehbar angeordneten hinteren Querbalken ein Hebel angeordnet ist, dass das freie Ende des Hebels mit dem Verbindungselement verbunden ist.

Weitere Einzelheiten der Erfindung sind den übrigen Unteransprüchen der Beispielsbeschreibung und den Zeichnungen zu entnehmen. Hierbei zeigen
- Fig. 1: die pneumatische Verteilmaschine in Seitenansicht in Arbeitsstellung und in Prinzipdarstellung,
- Fig. 2: die Verteilmaschine mit nach hinten unten verschwenktem Verteilerkopf in Seitenansicht,
- Fig. 3: die Verteilmaschine in Seitenansicht, wobei der Verteilerkopf und der Tragrahmen mit den eingeschwenkten hinteren Materialablageeinrichtungen sich in Transportstellung befinden,
- Fig. 4: die Verteilmaschine in Seitenansicht mit teilweise aufgerichtetem Verteilerkopf und mit in einer Zwischenphase aus der Transportstellung gebrachter hinterer Reihe der Materialablageeinrichtung in Seitenansicht und
- Fig. 5: die Verteilmaschine mit aufgerichtetem Verteilerkopf und vom Verteilerkopf in Arbeitsstellung gebrachter hinterer Reihe der Materialablageeinrichtung, wobei der Schwenkrahmen mit den Materialablageeinrichtungen sich noch in aufrechter Stellung befindet.

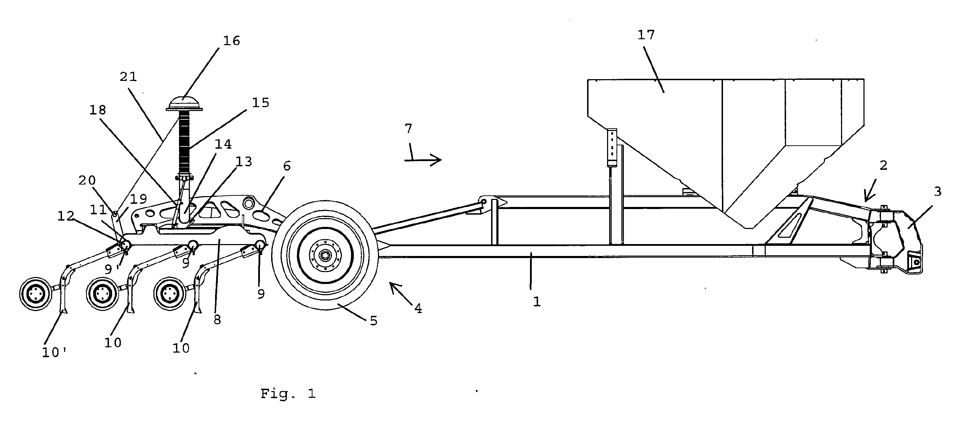

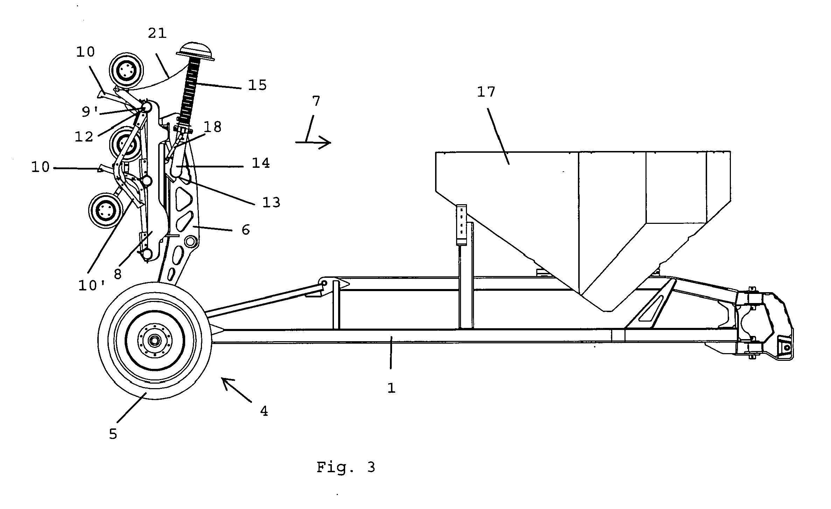

Das gezogene landwirtschaftliche Arbeitsgerät ist im Ausführungsbeispiel als Großflächensämaschine ausgebildet. Das Arbeitsgerät weist einen Zentralrahmen 1 auf, der auf seiner Vorderseite 2 eine Zugdeichsel 3, die als schwenkbares Kuppelelement zur Ankupplung an die Unterlenker eines Ackerschleppers ausgebildet ist, aufweist. Auf der Rückseite 4 weist der Zentralrahmen 1 ein als sich über auf dem Boden abrollenden und abstützenden Stützelementen ausgebildetes Laufwerk 5 auf. An der Rückseite 4 des Zentralrahmens 1 ist der Schwenkrahmen 6 mittels einer Gelenkanordnung angeordnet. Der Schwenkrahmen ist um eine quer zur Fahrtrichtung 7 verlaufende Schwenkachse aus der in Fig. 1 dargestellten Arbeitsstellung in die in Fig. 3 dargestellte aufrechte Transportstellung mittels eines nicht dargestellten Hydraulikzylinders, der zwischen dem Zentralrahmen 1 und dem Schwenkrahmen 6 angeordnet ist, zu verschwenken. An dem Schwenkrahmen 6 sind der Tragrahmen 8 mit den beabstandet hintereinander angeordneten Querbalken 9 und den daran angeordneten und als Säelemente 10 ausgebildeten Bodenbearbeitungselementen und Materialablageeinrichtungen angeordnet. An den hintereinander angeordneten Querbalken 9 sind quer zur Fahrtrichtung 7 beabstandet und auf Lücke zueinander, wie vorerwähnt, die als Säelemente 9 ausgebildeten Bodenbearbeitungselemente und Materialablageeinrichtungen angeordnet.

An dem Schwenkrahmen 6 können nicht dargestellte, als Seitenrahmen ausgebildete Tragbalken oder Tragrahmen angeordnet sein, an denen wiederum in Abständen zueinander, wie an dem Schwenkrahmen 6, Querbalken mit daran angeordneten als Säelemente ausgebildete Bodenbearbeitungs- und Materialablageeinrichtung angeordnet sein. In diesem Falle sind die Seitenrahmen mittels Gelenkanordnungen, deren Schwenkachse in Arbeitsstellung des Schwenkrahmens 7 in Fahrtrichtung 6 verlaufen, schwenkbar angeordnet.

Der hintere Querbalken 9' ist am dem am Tragrahmen 8 angeordneten Schwenkrahmen 6 mittels Gelenkanordnungen 11, deren Schwenkachse 12 quer zur Fahrtrichtung 7 und horizontal verläuft, verdrehbar angeordnet. Durch die drehbare Anordnung des Querbalkens 9' sind die daran angeordnete Säelemente 10' aus der in Fig. 1 dargestellten Arbeitsposition in die in Fig. 3 eingezogene Position zwischen den an den davor angeordneten Materialablageeinrichtungen 10 oder Bodenbearbeitungselementen in verschwenkbarer Weise einziehbar angeordnet.

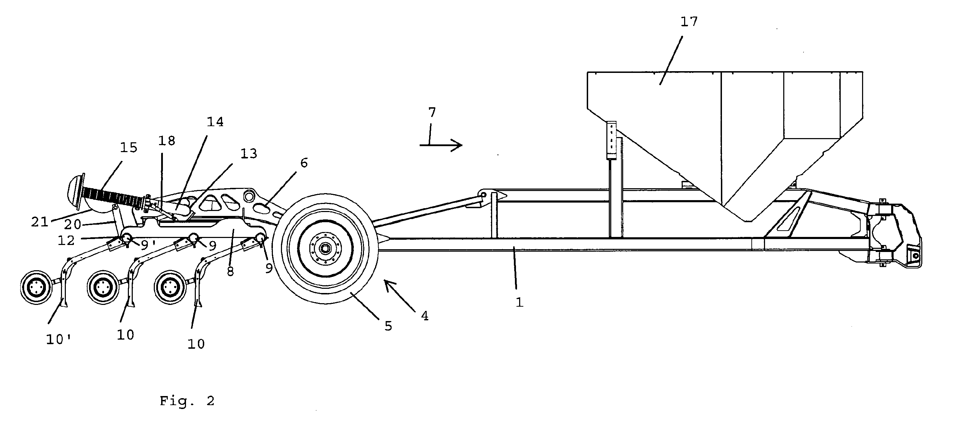

Auf dem mit dem Tragrahmen 8 verbundenen Schwenkrahmen 6 ist mittels einer Gelenkanordnung 13, deren Schwenkachse 14 quer zur Fahrtrichtung 7 und horizontal verläuft, das Steigrohr 15 mit dem Verteiler 16 angeordnet. Dem Steigrohr 15 wird über eine nicht dargestellte pneumatische Förderleitung ein die über eine nicht dargestellte Dosiereinrichtung das sich im Vorratsbehälter 17 befindliche Material, Saatgut und/oder Dünger, in einstellbaren Mengen eingespeist, zugeführt über den ,Verteiler 16 wird das Material auf von dem Verteiler 16 zu den Säelementen führenden und nicht dargestellten Saatleitungen aufgeteilt. Zwischen dem Schwenkrahmen 6 und dem Steigrohr 15 ist ein motorisches Stellelement 18, welches im Ausführungsbeispiel als doppeltwirkender Hydraulikzylinder ausgebildet ist, angeordnet. Mittels dieses motorischen Stellelementes kann das Steigrohr 15 mit dem Verteiler 16 aus in Fig. 1 dargestellten aufrechten Arbeitsstellung entgegen der Arbeitsrichtung 7 durch das motorische Stellelement 18 in eine liegende Position bzw. in di parallele Ebene zum Schwenkrahmens 6 eingeschwenkt werden, wie dies Fig. 2 zeigt.

An dem hinteren, verschwenkbar angeordneten Querbalken 9' ist ein Hebel 19 drehfest angeordnet. Das freie Ende 20 des Hebels 19 ist über ein als Zugelement ausgebildetes Verbindungselement 21 mit dem Steigrohr 15 verbunden. Das Verbindungselement 21 ist beabstandet zu der Drehachse 14, um welche das Steigrohr 15 verschwenkbar ist, an dem Steigrohr 15 befestigt. Das Verbindungselement 21 kann beispielsweise als Seil, Kette, Gliederelement etc. ausgebildet sein.

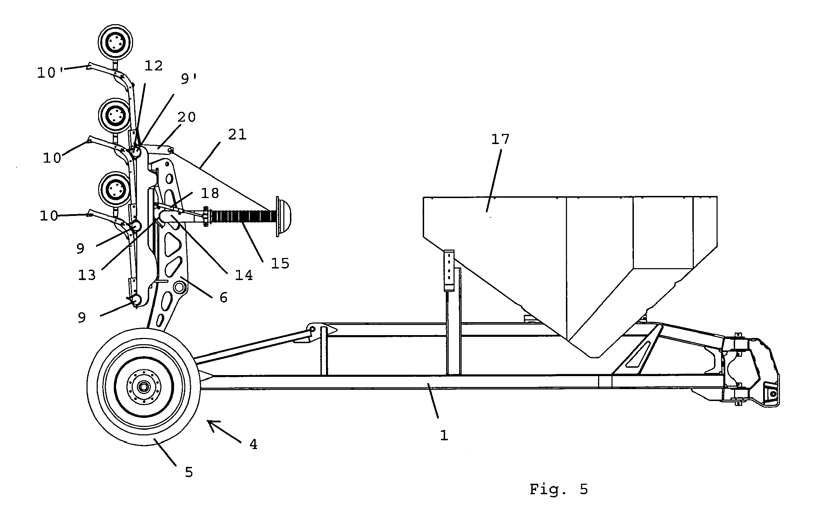

Der hintere verdrehbar angeordnete Querbalken 9' ist mittels einer nicht dargestellten lösbaren Arretierungsvorrichtung in der Arbeitsstellung der als Säelemente 10 ausgebildeten Materialablageeinrichtungen und/oder Bodenbearbeitungswerkzeuge gegenüber dem an dem Schwenkrahmen 6 angeordneten Tragrahmen 8 oder Tragbalken festsetzbar. Aufgrund des zwischen dem Steigrohr 15 und dem über dem Hebel 19 der an dem hinteren Querbalken 9 angeordnet ist, angeordneten Verbindungselement lässt sich beim Aufrichten des Steigrohres 15 der hintere Querbalken 9' verdrehen, so dass die an dem hinteren Querbalken 9' angeordneten als Säelement ausgebildete Materialablageeinrichtung aus der eingezogenen Position gemäß Fig. 3 in die Arbeitsposition gemäß Fig. 1 und 5 gebracht werden und dann über die erwähnte Arretierungsvorrichtung in der Arbeitsstellung festgesetzt werden.

### Die Funktionsweise ist folgende:

In Arbeitsstellung befindet sich der Schwenkrahmen mit dem Tragrahmen und den daran angeordneten als Säelemente ausgebildeten Materialablageeinrichtungen oder Bodenbearbeitungswerkzeugen in der in Fig. 1 dargestellten Stellung. Um die Maschine in die Transportstellung zu überführen und um gleichzeitig in der Transportstellung eine niedrige Höhe bei kompakter Anordnung der Bauteile der Maschine zu gewährleisten, wird zunächst über den als Hydraulikzylinder 18 ausgebildeten motorischen Stellelement das Steigrohr mit dem Verteiler aus dem in Fig. 1 dargestellten Position in die in Fig. 2 dargestellte Position nach hinten um die Gelenkachse der Gelenkanordnung 13 entgegen der Fahrtrichtung 7 bzw. der Arbeitsrichtung nach hinten verschwenkt, so dass das Steigrohr in eine liegende Position gebracht wird, in welcher es sich dann etwa parallel zu dem Schwenkrahmen bzw. des Tragrahmens 8 befindet. Zusätzlich wird noch von Hand oder mittels einer Fernbedienungseinrichtung das lösbare Arretierungselement gelöst, welches den hinteren Querbalken 9' in der Arbeitsposition wie die Fig. 1 dargestellt, festsetzt. Anschließend wird der Schwenkrahmen mit dem Tragrahmen und dem an dem Tragrahmen angeordneten Säelemente 9 in eine aufrechte Position entsprechend Fig. 3 verschwenkt. Bei diesem Schwenkvorgang wird der hintere Querbalken 9' durch die auf die Säelemente einwirkende Schwerkraft verschwenkt, so dass die Säelemente 9' der hinteren Querreihe, die an dem hinteren verschwenkbaren bzw. verdrehbaren Querbalken 9' angeordnet sind, so dass die Säelemente in Richtung der vorderen Säelemente und zwischen diesen einziehbar sind, wie dieses die Fig. 3 zeigt.

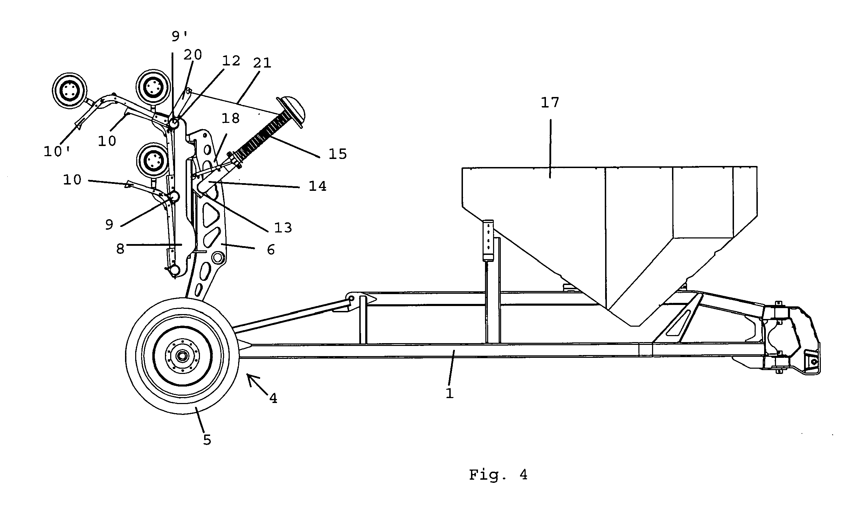

Wenn der Schwenkrahmen mit dem Steigrohr und dem Verteiler sowie den daran angeordneten Säelementen wieder in die Arbeitsposition gemäß Fig. 1 gebracht werden sollen, so wird zunächst durch das motorische Stellelement das Steigrohr mit dem Verteiler über die Zwischenposition gemäß Fig. 4 in die Position gemäß Fig. 5 aufgerichtet. Aufgrund des zwischen dem Steigrohr und dem an dem hinteren verdrehbar angeordneten Querbalken angeordneten Hebels, befestigten Verbindungselement, welches als Seilkette etc. ausgebildet sein kann wird der hintere Querbalken mit den hinteren Materialablageeinrichtungen derart verdreht, dass die hinteren Materialablageeinrichtung aus der eingezogenen Position gemäß Fig. 3 in ihre Arbeitsposition gegenüber dem Tragbalken oder -rahmen gemäß Fig.5 gebracht werden. Wenn der hintere verdrehbare Querbalken mit den daran angeordneten Säelementen die Position gemäß Fig. 5 erreicht hat, wird der hintere Querbalken über die Verriegelungseinrichtung in der Arbeitsposition gegenüber dem Tragrahmen bzw. Schwenkrahmen verriegelt bzw. festgesetzt.

Anschließend wird über das zwischen dem Zentralrahmen und dem angeordnete und nicht dargestellte motorische Stellelement, beispielsweise eine doppeltwirkenden hydraulischen Stellzylinder der Schwenkrahmen mit den daran angeordneten Tragrahmen und Säelementen und Steigrohr mit Verteiler aus der Fig. 5 in die Arbeitsposition gemäß Fig. 1 verschwenkt.

Der Schwenkrahmen mit dem Tragbalken oder -rahmen ist also um mindestens 60° verschwenkbar. Der Schwenkwinkel kann insgesamt zwischen 60° und 120° betragen.

## Patentansprüche

1. Pneumatische Verteilmaschine mit einem Rahmen (1), Vorratsbehälter (17), dem Vorratsbehälter zugeordneter Dosiervorrichtung, die das sich im Vorratsbehälter (17) befindliche auszubringende Material in zumindest eine pneumatisch beaufschlagte und zu zumindest einem aufrecht stehend angeordnetem Steigrohr (15) mit zugeordnetem Verteiler führende Förderleitung einspeist, wobei das zumindest eine Steigrohr mit dem Verteiler auf zumindest einem Tragbalken (6,8) und/oder -rahmen der Verteilmaschine um eine quer zur Fahrtrichtung (7) verlaufende Achse verschwenkbar angeordnet ist, wobei von zumindest einem Verteiler Verteilerleitungen zu an Querbalken (9,9') angeordneten Materialablageeinrichtungen (10,10') führen, wobei das Steigrohr (15) mit dem Verteiler mittels eines motorischen Stellelementes (18) entgegen der Arbeitsrichtung (7)verschwenkbar ist, wobei die Materialablageeinrichtung (10,10') in mehreren Querreihen hintereinander und auf Lücke zueinander an den Querbalken (9,9') des Tragbalkens (6,8) und/oder -rahmens angeordnet sind, wobei der Tragbalken und/oder -rahmen (6,8) mit den an seinen Querbalken (9,9') angeordneten Materialablageeinrichtungen (10) um eine quer zur Fahrt- und/oder Arbeitsrichtung (7) in eine aufrechte Transportstellung verlaufende Schwenkachse in Arbeitsrichtung (7) verschwenkbar angeordnet ist, wobei zumindest der hintere Querbalken (9'), an dem die hinteren Materialablageeinrichtungen (10') angeordnet sind, um eine quer zur Arbeitsrichtung (7) verlaufende Schwenkachse (12) in der Weise verdrehbar ist, dass die Materialablageeinrichtungen (10') in Richtung der vorderen Materialablageeinrichtungen (10) einziehbar sind, und wobei zwischen dem hinteren Querbalken (9') und dem Steigrohr (15) ein vorzugsweise als Zugelement ausgebildetes Verbindungselement (21) angeordnet ist, und zwar derart, dass beim Aufrichten des Steigrohres (15) der hintere Querbalken (9') mit den hinteren Materialablageeinrichtungen (10') derart verdrehbar ist, dass die hinteren Materialablageeinrichtungen (10') aus der eingezogenen Position in ihre Arbeitsposition gegenüber dem Tragbalken (6,8) und/oder -rahmen gebracht werden und/oder bringbar sind.

2. Verteilmaschine nach Anspruch 1, **dadurch gekennzeichnet, dass** der hintere verdrehbar angeordnete Querbalken (9') mittels einer lösbaren Arretierungsvorrichtung in der Arbeitsstellung der Materialablageeinrichtungen (10') gegenüber dem Tragrahmen (6,8) oder -balken festsetzbar ist.

3. Verteilmaschine nach einem oder mehreren der vorstehenden Ansprüche, **dadurch gekennzeichnet, dass** am verdrehbar angeordneten hinteren Querbalken (9') ein Hebel (20) angeordnet ist, dass das freie Ende des Hebels (20) mit dem Verbindungselement (21) verbunden ist.

4. Verteilmaschine nach Anspruch 1, **dadurch gekennzeichnet, dass** der Tragbalken (9') und/oder -rahmen um zumindest 60° Verschwenkbar ist.

5. Verteilmaschine nach Anspruch 1, **dadurch gekennzeichnet, dass** der Tragbalken (9') und/oder -rahmen zwischen 60° und 120° verschwenkbar ist.
